(19) **Europäisches Patentamt**

**European Patent Office**

**Office européen des brevets**

(11) **EP 0 641 624 B1**

(12) **EUROPEAN PATENT SPECIFICATION**

(45) Date of publication and mention
of the grant of the patent:
**01.04.1998 Bulletin 1998/14**

(51) Int. Cl.$^6$: **B23Q 11/00**, B23Q 15/18,
G05B 13/02, G05B 19/401

(21) Application number: **94306468.3**

(22) Date of filing: **02.09.1994**

(54) **Machine tool**

Werkzeugmaschine

Machine outil

(84) Designated Contracting States:
**DE GB**

(30) Priority: **07.09.1993 JP 246450/93**

(43) Date of publication of application:
**08.03.1995 Bulletin 1995/10**

(73) Proprietor: **SODICK CO., LTD.**
**Yokohama Kanagawa 222 (JP)**

(72) Inventors:
• **Araie, Ichiro,**
**c/o Sodick Co.,Ltd.**
**Sakai-gun, Fukui 919-05 (JP)**
• **Akemura, Osamu,**
**c/o Sema Sodick Co.,Ltd.**
**Yokohama, Kanagawa 226 (JP)**

(74) Representative:
**Kensett, John Hinton**
**Saunders & Dolleymore,**
**9 Rickmansworth Road**
**Watford, Hertfordshire WD1 7HE (GB)**

(56) References cited:
**EP-A- 0 138 375      EP-A- 0 406 574**
**DE-A- 3 221 381      US-A- 5 259 064**

• **PATENT ABSTRACTS OF JAPAN vol. 10, no. 326**
**(M-532) 6 November 1986 & JP-A-61 131 854**
**(HITACHI LTD) 19 June 1986**
• **PATENT ABSTRACTS OF JAPAN vol. 9, no. 142**
**(M-388) 18 June 1985 & JP-A-60 020 839**
**(CITIZEN TOKEI KK) 2 February 1985**

## Description

The present invention relates to a machine tool for cutting, shaping, grinding, boring or polishing a workpiece displacing a machining tool relatively to the workpiece. More specifically, the present invention relates to a machine tool equipped with a control system which is capable of correcting an error in positioning due to thermal deformations of machine components.

In general, when a machine tool for cutting, shaping, grinding, boring or polishing a workpiece, especially metal workpiece into a desired profile, requires the accurate positioning of a moveable element such as a machining tool or a workpiece being machined, the workshop is maintained at a constant temperature, for example, by means of an air conditioner to prevent thermal deformations including thermal expansion and contraction of machine components. Nevertheless, a machine body of the machine tool may be wholly or partly affected by the heat emitted by other machines installed nearby and the variation in the outside temperature. Further, the machine body itself has heat emitting parts which may cause thermal deformations of machine components, which in turn may result in an error in positioning a moveable element.

It is difficult to accurately estimate and correct such positioning error when thermal deformations of a plurality of machine components such as a bed, a column and a head cause the positioning error since the magnitude of thermal deformation depends on the size and material of a machine component and the directions of thermal deformations may be different from each other.

EP-A-0 138 375 discloses a machining apparatus according to the preamble of claim 1, in which a programmed control system receives sensed temperatures from temperature sensors and provides correction signals based on these.

An object of the present invention is to provide a machine tool equipped with a control system which can accurately correct an error due to thermal deformations of machine components in positioning the moveable element such as a machining tool and a workpiece to be machined. Another object of the present invention is to provide a machine tool equipped with a control system which can infer thermal deformations of machine components based on sensed temperatures of the machine components suitably for the circumstances where the machine tool is installed.

Additional objects and advantages and novel features of the invention will be set forth in part in the description which follows, and in part will become apparent to those skilled in the art upon examination of the following, or may be learned by practice of the invention. The objects and advantages of the invention may be realized and attained by means of the instrumentalities and combinations particularly pointed out in the appended claims.

According to the present invention there is provided a machine tool having a plurality of components subject to thermal deformation, for machining a workpiece into a desired profile using a tool in which said tool and workpiece are moveable relative to each other, said machine tool comprising: a numerical controller for providing a drive signal to move said tool relative to said workpiece along at least one axis of movement; thermosensors for sensing temperatures of at least some of said plurality of components; inferring means for inferring thermal deformations of said components in the direction of said axis of movement; a correction value calculator for providing a correction signal indicative of a correction value in the direction of said axis of movement based on said inferred values of thermal deformation; and wherein said numerical controller is operable to correct said drive signal by said correction signal to correct any positioning error due to thermal deformation in the direction of said axis of movement; characterised in that said inferring means includes a plurality of neural networks having a number of neurons, each of said neural networks being adapted to receive temperature signals indicative of the sensed temperatures, and measured values of thermal deformations of said components in the direction of said axis, as teaching signals to thereupon generate inferred values of thermal deformation of said components in the direction of said axis.

The accompanying drawings, which are incorporated in and form a part of the specification, illustrate embodiments of the present invention and, together with the description, serve to explain the principles of the invention. In the drawings:

FIG. 1 is a block diagram illustrating a control system of a machine tool embodying the present invention;
FIG. 2 is a schematic side view of a machine body incorporated with a control system of FIG. 1;
FIG. 3 is a schematic front view of the machine body of FIG. 2;
FIGS. 4(A)-(F) are diagrams illustrating an input(s) and an output of each of neural networks of the inferring section shown in FIG. 1;
FIGS. 5(A)-(C) are schematic side views of the machine body;
FIG. 6 is a graph in which temperatures sensed by thermosensors are plotted;
FIG. 7 is a graph comparing the inferred value of thermal deformation of the column to the measured value;
FIG. 8 is a graph comparing the inferred value of thermal deformation of the head to the measured value;
FIG. 9 is a graph comparing a corrected error in positioning along Z-axis to an uncorrected one;
FIG. 10 is a schematic view illustrating the locations of measuring electrodes and pins; and
FIGS. 11(A) - (C) are diagrams illustrating inputs and an output of each of neural networks of another inferring section.

An embodiment of the invention is described hereinafter in detail with reference to the drawings.

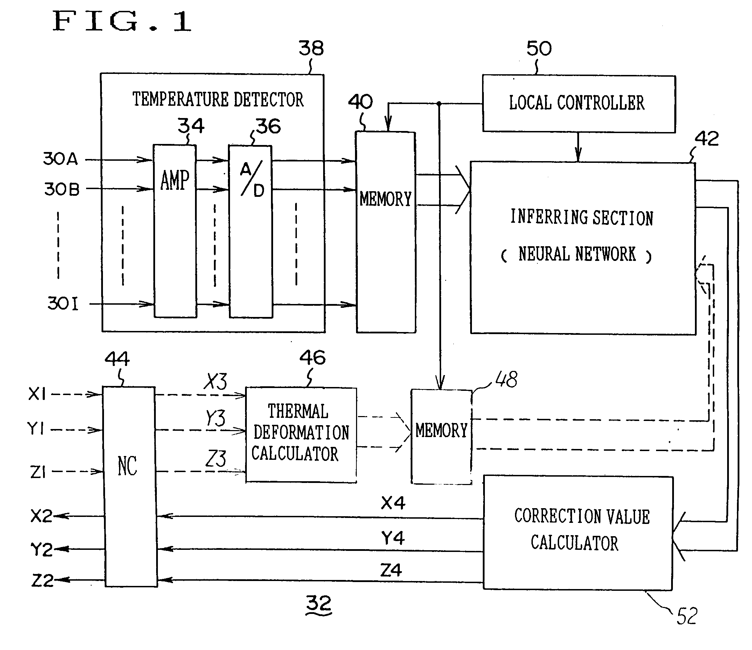

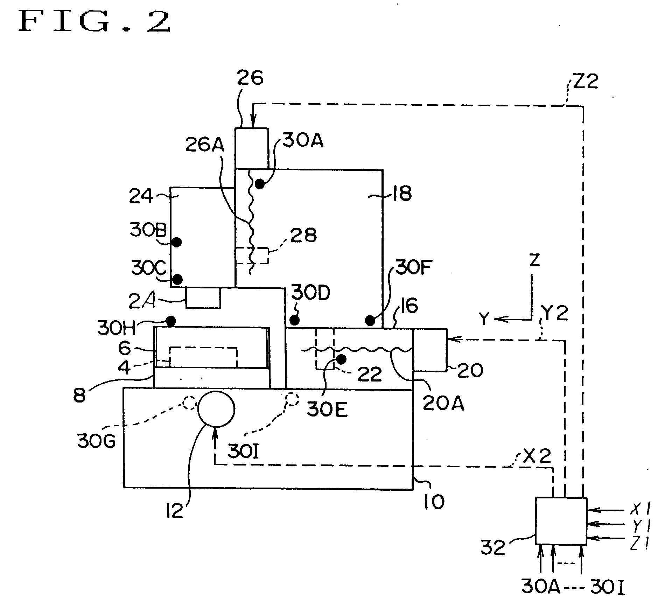

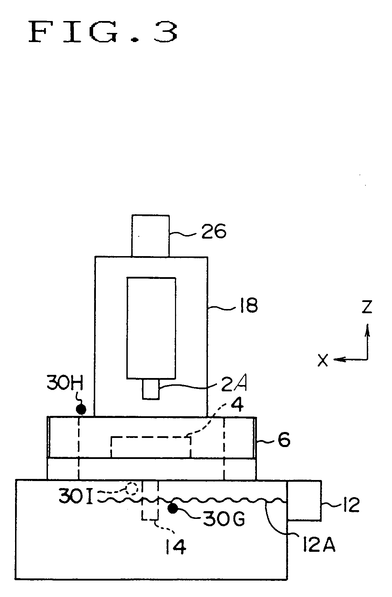

FIG. 1 is a block diagram illustrating a control system of a machine tool. FIG. 2 is a schematic side view of a machine body of a machine tool. FIG. 3 is a schematic front view of the machine body of FIG. 2.

Turning first to FIG. 2 and 3, an electric discharge machine, which is one of machine tools, for machining a electrically conductive workpiece using a tool electrode by means of electric discharges induced in a spacing between the workpiece and the tool electrode will now be described. This electric discharge machine has a typical construction of a machine tool and includes a bed 10, a column 16, a ram 18 and a servo head 24.

The column 16 is provided on the bed 10. An X-axis table 8 is slidably provided on the bed 10 in front of the column 16. A work tank 6 is provided on the X-axis table 8 for containing a dielectric fluid. The workpiece 4 is securely mounted on an appropriate table fixed on the X-axis table 8. An X-axis ball screw 12A equipped with a nut 14 is fixedly provided on the bed 10. The nut 14 threadedly engages with the X-axis ball screw 12A and is coupled with the X-axis table 8. The X-axis ball screw 12A is rotated by an X-axis drive motor 12 to longitudinally move the X-axis table 8, in other words, the workpiece 4 in the direction of an X-axis. A drive signal X2 from a control system 32 is applied to the X-axis drive motor equipped with a position detector such as an encoder, which senses an angular displacement of the X-axis drive motor and provides an encoder signal X1 indicative of the sensed displacement to the control system 32.

The ram 18 is slidably moveable on the column 16. A Y-axis ball screw 20A equipped with a nut 22 is fixedly provided on the column 16. The nut 22 threadedly engages with the Y-axis ball screw 20A and is coupled with the ram 18. The Y-axis ball screw 20A is rotated by a Y-axis drive motor 20 to longitudinally move the ram 18 in the direction of a Y-axis. The servo head 24 is slidably moveable on the ram 18 in the direction of a Z-axis orthogonal to a plane defined by X- and Y-axes. A Z-axis ball screw 26A equipped with a nut 28 is fixedly provided on the upper end in the front part of the ram 18. The nut 28 threadedly engages with the Z-axis ball screw 26A and is coupled with the servo head 24. The Z-axis ball screw 26A is rotated by a Z-axis drive motor 26 to longitudinally move the servo head 24 in the direction of a Z-axis. The Y-axis and Z-axis drive motors 20 and 26 are also equipped with position detectors such as encoders, provide encoder signals Y1 and Z1 to the control system 32, which applies drive signals Y2 and Z2 to the Y-axis and Z-axis drive motors 20 and 26, respectively. A holder chuck 2A is provided on the lower end of the servo head 24 for holding a tool holder (not illustrated) on which a tool electrode (not illustrated) is rigidly mounted. The tool electrode advances from the above toward the workpiece 4 contained in the work tank 6 filled with a dielectric fluid to induce electric discharges in a spacing between the tool electrode and the workpiece while a train of power pulses are supplied across the spacing from an appropriate power source (not illustrated).

In the illustrated embodiment, nine thermosensors 30A -30I are provided on the components of the machine body. Thermosensors 30A, 30E and 30G are located near the Z-axis ball screw 26A, the Y-axis ball screw 20A and the X-axis ball screw 12A, respectively. A thermosensor 30B is located in the middle of the vertical direction of the servo head 24 and a thermosensor 30C is located at the lower end of the servo head 24. A thermosensor 30D is located at the lower front of the ram 18 and a thermosensor 30F is located at the lower back of the ram 18. A thermosensor 30H is located a little above the upper part of work tank 6. A thermosensor 30I is located in the middle of an X-axis direction of the bed 10 under the column 16.

As best seen in FIG. 1, the sensed temperatures by the thermosensors 30A - 30I are supplied to the control system 32. The control system 32 is computerized with a number of microprocessors.

The control system 32 includes a temperature detector 38 and a memory 40. The temperature detector 38 has an amplifier 34 for amplifying the values from the thermosensors 30A - 30I and an analog-to-digital converter 36 for converting output signals of the amplifier 34 to digital signals. The memory 40, which is made up, for example, of a RAM, receives and stores outputs of the analog-to-digital converter 36.

The control system 32 further includes a numerical controller 44, which furnishes drive signals X2, Y2 and Z2 to X-, Y- and Z-axis drive motors 12, 20 and 26 in accordance with a prescribed program to cause displacements of the workpiece 4 or the tool electrode relative to the other along X-, Y- and Z-axis. The drive signals indicative of required angular displacements of motors are applied to drive motors from the numerical controller 44 and then the encoder signals X1, Y1 and Z1 indicative of actual angular displacements of motors are fed back to the numerical controller 44. By using the encoder signals the numerical controller 44 controls drive signals so that the required displacements and the actual displacements are always in agreement. There is no need to describe the numerical controller 44 as it has a well-known construction.

The control system 32 further includes a thermal deformation calculator 46, a memory 48, an inferring section 42 and a local controller 50. The thermal deformation calculator 46 receives error signals X3, Y3 and Z3, which indicates errors in positioning in the directions of X-, Y- and Z-axis, to calculate thermal deformations of machine components. The errors in positioning are sensed at given time intervals changing the room temperature. The memory 48, which is made up, for example, of a RAM, receives and stores the output signals of the thermal deformation calculator 46 indicative of thermal deformations of machine components related to the sensed temperatures.

The inferring section 42 includes neural networks each of which include a number of layers including an input layer for receiving signals from an external of a neural network and an output layer for providing signals to an external of the neural network. All of the layers are independent of each other, and each of which can receive signals only from a preceding layer and include neuron(s), all of which execute nonlinear signal processing. According to a bonding strength between neurons, which can be adaptively changed by learning, a signal is weighted.

The temperature signals indicative of temperatures from the memory 40 are supplied to the input layers of the inferring section 42. Further, the signals indicative of thermal deformations of machine components related to the temperatures are supplied to the output layers of the inferring section 42 as teaching signals. Based on the temperature signals and preset bonding strengths between neurons, output signals are obtained in the output layers of the inferring section 42, which output signals are compared to the teaching signals, respectively. The inferring section 42 corrects bonding strengths between neurons so that the output signals obtained in the output layers will agree with the teaching signals. The inferring section 42 repeatedly carries out this learning protocol.

When displacing a tool electrode relatively to the workpiece 4, the inferring section 42 infers the thermal deformations of machine components based on sensed temperatures using the neural networks with the corrected bonding strengths between neurons. The inferring section 42 provides the inferred thermal deformations of machine components, based on which, a correction value calculator 52 calculates correction values along X-, Y- and Z-axes. The signals X4, Y4 and Z4 indicative of the correction values along X-, Y- and Z-axes are supplied to the numerical controller 44. The numerical controller 44 combines the drive signals X2, Y2 and Z2 and the correction signals X4, Y4 and Z4, respectively, to correct errors in positioning along X-, Y- and Z-axes due to thermal deformations.

Operation of the machine tool, which can be largely divided into three processes, will now be described. A first process is to measure and store thermal deformations of the machine components and temperatures of machine components sensed at the time when the thermal deformations are measured. In a second process, neural networks in the inferring section 42 carries out the learning by means of an appropriate software, based on the temperature data and thermal deformations. A third process is to measure temperature data of machine components, which is supplied to the inferring section 42, and to infer thermal deformations of machine components, based on which, correction values along X-, Y- and Z-axes are obtained.

In this embodiment, measurement of thermal deformations which cause an error in positioning along a Z-axis are described as an example.

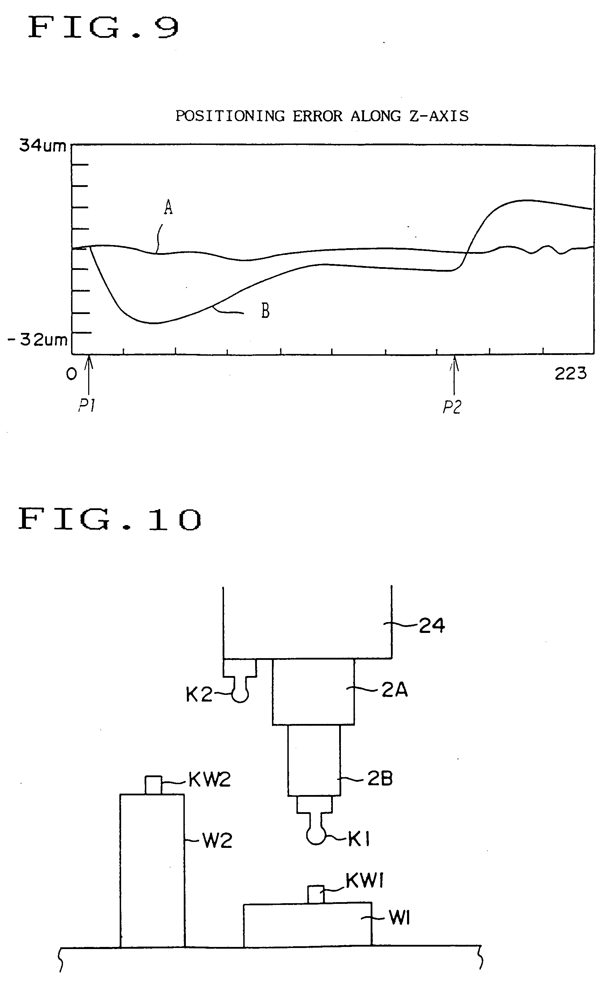

FIG. 10 is a schematic view illustrating the locations of measuring electrodes and pins for measuring thermal deformations in the direction of an Z-axis. A measuring electrode K1 is mounted on a tool holder 2B, which is rigidly attached on a holder chuck 2A. The holder chuck 2A is provided on the servo head 24. It is preferable that the other measuring electrode K2 is positioned on the same level as the nut 28 of the Z-axis ball screw 26A. For illustrative purpose, the measuring electrode K2 is shown on the lower end of the servo head 24. Workpieces W1 and W2 are securely mounted on an appropriate table. Measuring pins KW1 and KW2 are attached on the workpieces W1 and W2, respectively.

The temperatures of each of machine components have stabilized in a room temperature regulated to 21°C. Then, the measuring work is carried out powering the machine tool. Firstly, the electrode K1 is aligned with the center of the pin KW1 and the contact is made between the electrode K1 and the pin KW1. This contact position is defined as a datum point D1.

Secondly, in the same manner, the electrode K1 is aligned with the center of the pin KW2 and the contact between the electrode K1 and the pin KW2 is made. This contact position is defined as a datum point D2.

Thirdly, in the same manner, the electrode K2 is aligned with the center of the pin KW2 and the contact between the electrode K2 and the pin KW2 is made. This contact position is defined as a datum point D3.

The temperatures sensed at the time of measuring work by the nine thermosensors 30 A - 30I are supplied to the temperature detector 38. The sensed temperatures are amplified in the amplifier 34 and converted to digital signals in the analog-to-digital converter 36. The digital signals are supplied to and stored in the memory 40.

After a given time, for example, two minutes later, the measuring work is again carried out.

The numerical controller 44 supplies error signals Z3, which represent deflections of datum points at the first round of measuring work from datum points of second round of measuring work, to the thermal deformation calculator 46. The thermal deformation calculator 46 calculates thermal deformations of machine components, which are stored in the memory 48. Also, the memory 40 stores detected temperatures at the second round of measuring work.

Hereafter, at the given time intervals, the same measuring works are repeated while temperatures and errors in positioning are stored in the memory 40 and the memory 48 until the errors become constant.

Next, an example of calculation of the thermal deformation calculator 46 will be described. Here, as an example, thermal deformations of machine components which result an error in positioning in the direction of an Z-axis will be calculated since the positioning in the direction of an Z-axis is subject to the most complicated thermal deformations.

Firstly, a deformation ($\Delta$L) of the Z-axis ball screw 26A is obtained using the following relationship:

$$(\Delta L)=\eta \cdot \Delta T \cdot L$$

Here, $\eta$ is thermal coefficient of expansion of the ball screw and $\Delta T$ is a temperature rise above an initial temperature. The thermal deformation calculator 46 can obtain the temperature rise by receiving data of the initial temperature and the current temperature from the memory 40. L is a length from the fixing part, where the Z-axis ball screw 26A is fixed on the ram 16, to the nut 28.

Secondly, a deformation ($\Delta$H) of a head part from the nut 28 to the lower end of the electrode K1 is obtained using the following relationship:

$$(\Delta H)=P2-P3-\Delta L2+\Delta L3$$

P2 is the deflection of datum point D2 from preceding datum point D2. P3 is the deflection of datum point D2 from preceding datum point D3. $\Delta$L2 is a thermal deformation of the ball screw when the electrode K1 is contacted with the pin KW2. $\Delta$L3 is a thermal deformation of the ball screw when the electrode K2 is contacted with the pin KW2.

Thirdly, a deformation ($\Delta$C) of a column part including the ram 18 and the column 16 is obtained using the following relationship:

$$(\Delta C)=\frac{\Delta L1+(P1-P3-\Delta L1+\Delta L3)}{(W1/W2-1)-P2}$$

P1 is the deflection of datum point D1 from preceding datum point D1. $\Delta$L1 is a thermal deformation of the ball screw when the electrode K1 is contacted with the pin KW1. W1 and W2 are the distances from the upper surface of the work table to the top of the pins KW1 and KW2.

The obtained thermal deformations of the Z-axis ball screw, the head part and the column part are stored in the memory 48.

The inferring section 42 carries out a learning using data stored in the memory 40 and the memory 48.

The local controller 50 instructs the memory 40 to supply signals indicative of a set of the detected temperatures to the input layers of neural networks of the inferring section 42. The local controller 50 also instructs the memory 48 to supply signals indicative of the thermal deformations related to the set of the detected temperatures to the output layers of neural networks of the inferring section 42. Then, the local controller 50 instructs the inferring section 42 to start the learning. The inferring section 42 compares output signals of the output layers to teaching signals, i.e., the signals from the memory 48 and corrects bonding strengths between neurons so that the output signals of the output layers will agree with the teaching signals. In the same manner, the local controller 50 controls the memory 40, the memory 48 and the inferring section 44 for a further learning.

After the learnings of the neural networks are completed, the inferring section 42 infers the thermal deformations of machine components using the neural networks with the corrected bonding strengths between neurons.

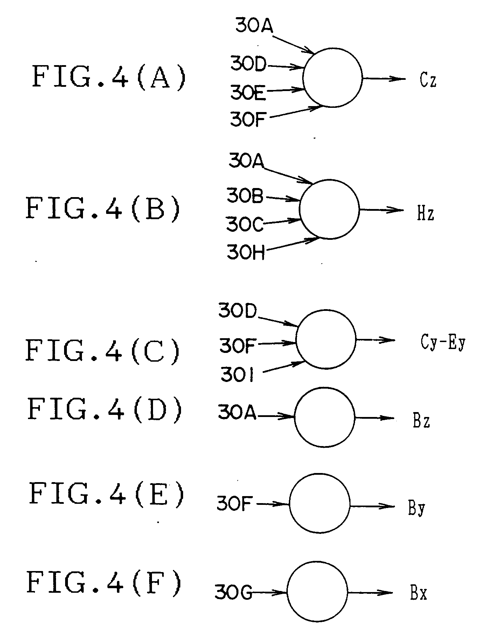

FIGS. 4(A) - (F) illustrates an input(s) and an output of each of neural networks for inferring thermal deformations of machine components as an example. FIG. 4(A) indicates that a thermal deformation of a column part in the direction of Z-axis is inferred based on the temperatures sensed by thermosensors 30A, 30D, 30E and 30F. FIG. 4(B) indicates that a thermal deformation of a head part in the direction of Z-axis is inferred based on the temperatures sensed by thermosensors 30A, 30B, 30C and 30H. FIG. 4(C) indicates that thermal deformations of the ram 18 and the bed 10 in the direction of Y-axis are inferred based on the temperatures sensed by thermosensors 30D, 30F and 30I. FIG. 4(D) indicates that a thermal deformation of the Z-axis ball screw is inferred based on the temperature sensed by the thermosensor 30A. FIG. 4(E) indicates that a thermal deformation of the Y-axis ball screw is inferred based on the temperature sensed by the thermosensor 30F. FIG. 4(F) indicates that a thermal deformation of the X-axis ball screw is inferred based on the temperature sensed by the thermosensor 30G.

During machining, the thermosensors 30A - 30I senses temperatures, data of which are provided to the temperature detector 38, which supplies the digital signals indicative of the temperatures to the memory 40. The local controller 50 supplies instruction signals to memories 40 and 48 and the inferring section 42 at given time intervals. Responsive to instruction signals from the local controller 50, the memory 40 provides signals of temperatures, based on which the inferring section 42 infers thermal deformations of machine components using the neural network with corrected bonding strengths between neurons.

As shown in FIG. 1, the inferred thermal deformations of machine components are provided to the correction value calculator 52 which calculates correction values in the X-, Y- and Z-axis directions considering directions of thermal deformations.

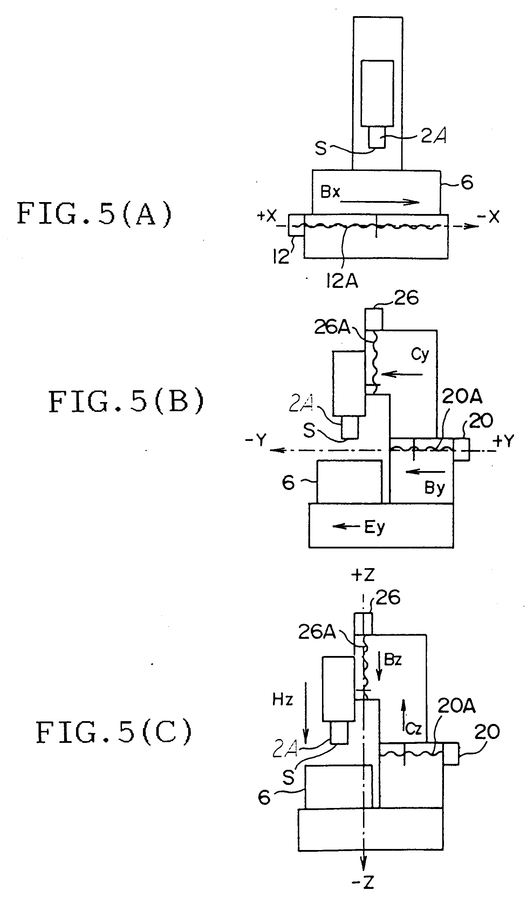

FIG. 5(A) indicates that an error due to thermal deformations in positioning a tool along an X-axis, which is mounted on a tool holder (not illustrated) held by a holder chuck 2A at the position S, is obtained based on a thermal deformation (Bx) of the X-axis ball screw 12A. FIG. 5(B) indicates that an error due to thermal deformations in positioning the tool along a Y-axis is obtained based on a thermal deformation (By) of the Y-axis ball screw 20A and a thermal deformation (Cy) of the ram 18 and a thermal deformation (Ey) of the bed 10. FIG. 5(C) indicates that an error due to thermal deformations in positioning the tool along a Z-axis is obtained based on a thermal deformation (Bz) of the Z-axis ball screw 26A and a thermal deformation (Hz) of the head part and thermal deformations (Cz) of the ram 18 and the column 16. In other words, correction values in the X-, Y- and Z-axis directions are obtained using the following relationships:

$$X\text{-axis correction value} = -(Bx)$$

$$Y\text{-axis correction value} = -(By+Cy+Ey)$$

$$Z\text{-axis correction value} = -(Bz+Hz-Cz)$$

The correction value calculator 52 provides correction signals X4, Y4 and Z4, which, respectively, represents the obtained X-axis, Y-axis and Z-axis correction values to the numerical controller 44. The numerical controller 44 combines the drive signals X2, Y2 and Z2 and the correction signals X4, Y4 and Z4, respectively, to correct errors in positioning along X-, Y- and Z-axes due to thermal deformations.

Since the neural network processes the temperature data sensed at each of machine components, the thermal deformations of machine components which complicatedly affect those of the other machine components are accurately grasped to correct errors in positioning due to thermal deformations of machine components.

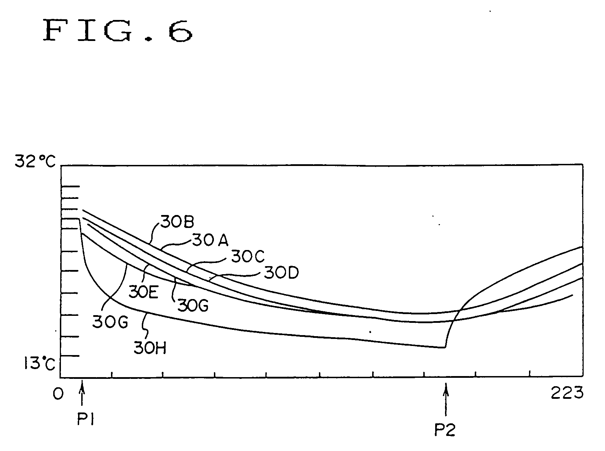

In FIGS. 6 - 9, measured thermal deformations and inferred thermal deformations are plotted. The horizontal axis of the graphs denotes the number of measurement which is taken every two minutes.

FIG. 6 is a graph in which temperatures sensed by thermosensors 30A - 30H are plotted. In advance, a room temperature is maintained at about 28°C using an appropriate heater. At time P1 the heater is turned off and the cooler is turned on to reduce the room temperature. Then, at time P2 when a room temperature drops to about 13°C, the cooler is turned off and the heater is turned on again to increase the room temperature. The graph of FIG. 6 indicates that the temperature sensed by the thermosensor 30H, which is located a little above the upper part of work tank 6, follows changes in the room temperature quiet closely. Further, the temperatures sensed by the thermosensors 30E, 30F and 30G are found to be somewhat behind the changes in the room temperature and the temperatures sensed by the thermosensors 30A, 30B, 30C and 30D are found to be very much behind the changes in the room temperature.

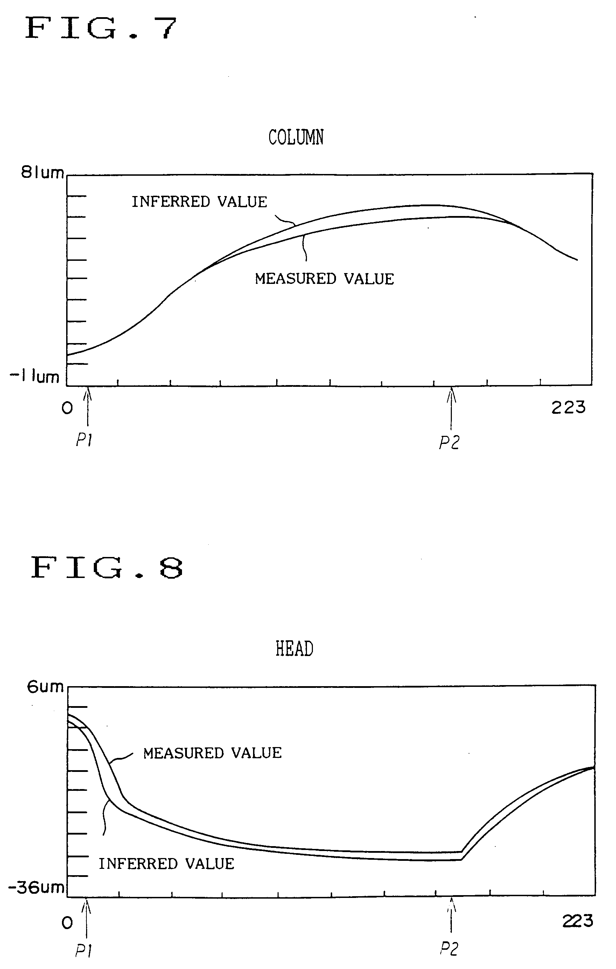

In FIG. 7, measured thermal deformation of the column in the direction of a Z-axis and thermal deformation thereof inferred by the neural network 42 are plotted. In FIG. 8, measured thermal deformation of the head in the direction of a Z-axis and thermal deformation thereof inferred by the neural network 42 are plotted. Both FIGS. 7 and 8 show that the measured value and the inferred value, although these values slightly deflects from each other in parts, are more or less in agreement.

In FIG. 9, a graph B illustrates an error in positioning along Z-axis without any correction and a graph A illustrates an error in positioning along Z-axis with correction of the present invention. Though an error in positioning due to thermal deformations fluctuates widely, it becomes more or less constant when it is corrected.

As will be appreciated by the artisan, error signals X3, Y3 and Z3 from the numerical controller 44 may be directly supplied to and stored in the memory 48 removing the thermal deformation calculator 46. In this case, errors in positioning along X-, Y- and Z-axes may be measured using a laser measuring device. The error signals stored in the memory 48 are used as teaching signals, based on which, the inferring section 42 adaptively changes bonding strengths between neurons.

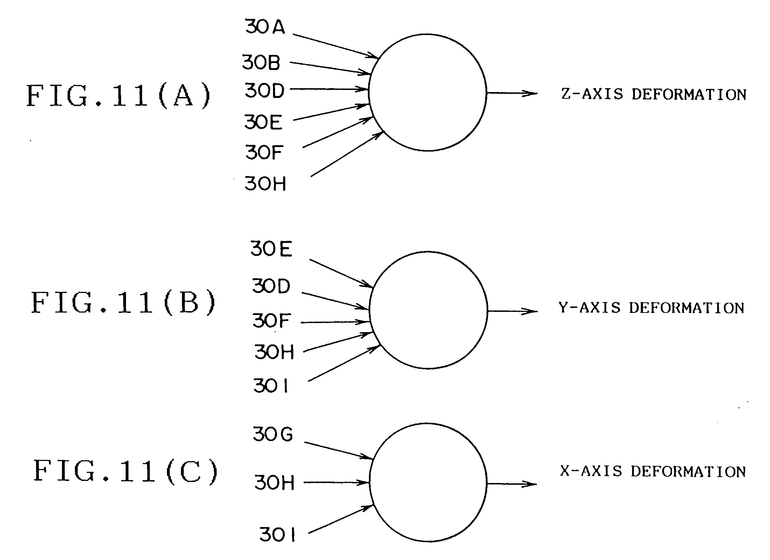

FIGS. 11(A) - (C) illustrates inputs and an output of each of neural networks for inferring errors in positioning along X-, Y- and -Z-axes as an example. FIG. 11(A) indicates that an error in positioning in the direction of Z-axis is inferred based on the temperatures sensed by thermosensors 30A, 30B, 30D, 30E, 30F and 30H. FIG. 11(B) Indicates that an error in positioning in the direction of Y-axis is inferred based on the temperatures sensed by thermosensors 30E, 30D, 30F, 30H and 30I. FIG. 11(C) indicates that an error in positioning in the direction of X-axis is inferred based on the temperatures sensed by thermosensors 30G, 30H and 30I. The inferring section 42 supplies signals indicative of the inferred errors in positioning to the correction value calculator 52. The correction value calculator 52 supplies signals indicative of correction values along X-, Y- and Z-axes for correcting errors in positioning to the numerical controller 44.

The foregoing description of a preferred embodiment of the invention has been presented for purposes of illustration and description. It is not intended to be exhaustive or to limit the invention to the precise form disclosed, and obviously many modifications and variations are possible in the light of the above teaching. For example, instead of using the nine thermosensors, more thermosensors may be used to infer thermal deformations more accurately. The scope of the invention is defined by the claims appended hereto.

**Claims**

1. A machine tool having a plurality of components subject to thermal deformation, for machining a workpiece into a desired profile using a tool in which said tool and workpiece are moveable relative to each other, said machine tool comprising:

    a numerical controller (44) for providing a drive signal (X2,Y2,Z2) to move said tool relative to said workpiece along at least one axis of movement;
thermosensors (30A-30I) for sensing temperatures of at least some of said plurality of components;
inferring means (42) for inferring thermal deformations of said components in the direction of said axis of movement;
a correction value calculator (52) for providing a correction signal (X4,Y4,Z4) indicative of a correction value in the direction of said axis of movement based on said inferred values of thermal deformation; and
wherein said numerical controller is operable to correct said drive signal by said correction signal to correct any positioning error due to thermal deformation in the direction of said axis of movement;
characterised in that said inferring means includes a plurality of neural networks having a number of neurons, each of said neural networks being adapted to receive temperature signals indicative of the sensed temperatures, and measured values of thermal deformations of said components in the direction of said axis, as teaching signals to thereupon generate inferred values of thermal deformation of said components in the direction of said axis.

2. The machine tool of Claim 1, further comprising a first memory (40) for storing said temperature signals wherein said inferring means receives said temperature signals from said first memory.

3. The machine tool of Claim 1, further comprising a second memory (48) for storing said measured values of thermal deformations of said components in the direction of said axis.

**Patentansprüche**

1. Werkzeugmaschine mit mehreren einer thermischen Verformung unterworfenen Bestandteilen zur Bearbeitung eines Werkstücks in ein gewünschtes Profil unter Verwendung eines Werkzeugs, bei der das Werkzeug und das Werkstück relativ zueinander beweglich sind, wobei die Werkzeugmaschine umfaßt:

eine numerische Steuerung (44) für die Bereitstellung eines Antriebssignals (X2, Y2, Z2) zur Bewegung des Werkzeugs relativ zum Werkstück entlang mindestens einer Bewegungsachse;
Thermosensoren (30A-30I) zur Erfassung der Temperaturen von wenigstens einigen Bestandteilen; eine Inferenzeinrichtung (42) zur Herleitung thermischer Verformungen der Bestandteile in der Richtung der Bewegungsachse;
einen Korrekturwertrechner (52) zur Bereitstellung eines Korrektursignals (X4, Y4, Z4), das einen Korrekturwert in der Richtung der Bewegungsachse auf der Grundlage der hergeleiteten Werte der thermischen Verformung angibt;
wobei die numerische Steuerung zur Korrektur des Antriebssignals durch das Korrektursignal betätigbar ist, um jeden Positionierfehler infolge thermischer Verformung in Richtung der Bewegungsachse zu korrigieren;
dadurch gekennzeichnet, daß die Inferenzeinrichtung mehrere neuronale Netzwerke mit mehreren Neuronen enthält, wobei jedes der neuronalen Netzwerke zur Aufnahme der die erfaßten Temperaturen angebenden Temperatursignale und der Meßwerte der thermischen Verformungen der Bestandteile in der Richtung der Achse als Lernsignale ausgelegt ist, um daraufhin hergeleitete Werte der thermischen Verformung der Bestandteile in der Achsrichtung zu erzeugen.

2. Werkzeugmaschine nach Anspruch 1, die ferner einen ersten Speicher (40) zur Speicherung der Temperatursignale enthält, wobei die Inferenzeinrichtung die Temperatursignale von dem ersten Speicher erhält.

3. Werkzeugmaschine nach Anspruch 1, die ferner einen zweiten Speicher (48) zur Speicherung der Meßwerte der thermischen Verformung der Bestandteile in der Richtung der Achse enthält.

**Revendications**

1. Machine-outil ayant plusieurs pièces composantes sujettes à une déformation thermique, pour usiner une pièce en un profil voulu à l'aide d'un outil, dans laquelle l'outil et pièce à usiner sont déplaçables l'un par rapport à l'autre, la machine-outil comprenant:

une commande numérique (44) pour donner un signal d'entraînement (X2, Y2, Z2) pour faire mouvoir cet outil par rapport à la pièce à usiner le long d'au moins un axe de déplacement;
des thermo détecteurs (30A-30I) pour détecter les températures d'au moins quelques unes des pièces composantes;
des moyens de déduction (42) pour déduire les déformations thermiques de ces pièces composantes dans la direction de l'axe de déplacement;
un compteur de rectification de valeur (52) donnant un signal de rectification (X4, Y4, Z4) indiquant une valeur rectificative dans la direction dudit axe de déplacement basée sur les valeurs déduites de déformation thermique; et

dans laquelle la commande numérique peut être manoeuvrée pour ajuster le signal d'entraînement au moyen du signal de rectification afin de corriger toute erreur de positionnement due à une déformation thermique dans la direction de l'axe de déplacement;

**caractérisée en ce que** les moyens de déduction comprennent une quantité de réseaux neuraux ayant un nombre de neurons, chacun de ces réseaux neuraux étant adaptés pour recevoir des signaux de température indiquant les températures détectées, ainsi que des valeurs mesurées de déformations thermiques des pièces composantes dans la direction dudit axe, pour servir de signaux didactiques afin d'y générer des valeurs déduites de déformation thermique des pièces composantes dans la direction dudit axe.

2. Machine-outil selon la revendication 1, comprenant de surcroît une première mémoire (40) pour emmagasiner les signaux de température, dans laquelle les moyens de déduction reçoivent les signaux de température de cette première mémoire.

3. Machine-outil selon la revendication 1, comprenant de surcroît une deuxième mémoire (48) pour emmagasiner les valeurs mesurées de déformations thermiques des pièces composantes dans la direction dudit axe.

# FIG.1

FIG.2

# FIG.3

FIG.4(A)

30A →
30D →
30E →     ◯ → Cz
30F →

FIG.4(B)

30A →
30B →
30C →     ◯ → Hz
30H →

FIG.4(C)

30D →
30F →     ◯ → Cy-Ey
30I →

FIG.4(D)

30A →     ◯ → Bz

FIG.4(E)

30F →     ◯ → By

FIG.4(F)

30G →     ◯ → Bx

FIG.5(A)

FIG.5(B)

FIG.5(C)

# FIG.6

# FIG.7

COLUMN

# FIG.8

HEAD

# FIG.9

POSITIONING ERROR ALONG Z-AXIS

# FIG.10

FIG.11(A)

FIG.11(B)

FIG.11(C)